(19) **Europäisches Patentamt European Patent Office Office européen des brevets**

(11) **EP 4 157 688 B1**

(12) **FASCICULE DE BREVET EUROPEEN**

(45) Date de publication et mention de la délivrance du brevet:
**03.07.2024 Bulletin 2024/27**

(21) Numéro de dépôt: **21729543.5**

(22) Date de dépôt: **31.05.2021**

(51) Classification Internationale des Brevets (IPC):
**B60W 30/14** *(2006.01)*

(52) Classification Coopérative des Brevets (CPC):
**B60W 30/143;** B60W 2420/40; B60W 2420/403;
B60W 2420/408; B60W 2555/20; B60W 2555/60;
B60W 2556/50

(86) Numéro de dépôt international:
**PCT/EP2021/064536**

(87) Numéro de publication internationale:
**WO 2021/245020 (09.12.2021 Gazette 2021/49)**

(54) **PROCÉDÉ ET SYSTÈME DE CONTRÔLE DE LA VITESSE D'UN VÉHICULE**

VERFAHREN UND SYSTEM ZUR STEUERUNG DER GESCHWINDIGKEIT EINES FAHRZEUGS

METHOD AND SYSTEM FOR CONTROLLING THE SPEED OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2020 FR 2005782**

(43) Date de publication de la demande:
**05.04.2023 Bulletin 2023/14**

(73) Titulaires:
• **Ampere SAS**
  **92100 Boulogne-Billancourt (FR)**
• **NISSAN MOTOR CO., LTD.**
  **Kanagawa 221-0023 (JP)**

(72) Inventeurs:
• **GACOIN, Nicolas**
  **78280 GUYANCOURT (FR)**
• **GOSSELIN, Eric**
  **78114 MAGNY LES HAMEAUX (FR)**
• **SIMONIN, Antoine**
  **92160 ANTONY (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 556 629      DE-A1-102014 016 578**
**DE-A1-102017 006 782**

EP 4 157 688 B1

**Description**

L'invention concerne un procédé de contrôle de la vitesse d'un véhicule. L'invention porte aussi sur un système de contrôle de la vitesse d'un véhicule. L'invention porte encore sur un véhicule comprenant un tel système. L'invention porte également sur un produit programme d'ordinateur mettant en oeuvre le procédé mentionné. L'invention porte aussi sur un support d'enregistrement sur lequel est enregistré un tel programme. L'invention porte enfin sur un signal d'un support de données, portant un tel produit programme d'ordinateur.

Certains véhicules automobiles sont équipés d'un système de régulation automatique de vitesse adaptatif, de type "ACC", acronyme d'origine anglo-saxonne pour « Adaptive Cruise Control ». De tels systèmes permettent d'adapter la vitesse du véhicule, notamment en fonction de la vitesse d'un véhicule le précédant. Ces systèmes permettent également de réguler la vitesse du véhicule autour d'une valeur de consigne lorsqu'aucun véhicule ou obstacle n'est détecté à l'avant du véhicule.

Des systèmes dits « ACC contextuel » ou « ACC intelligent » permettent en outre d'adapter la vitesse du véhicule en fonction du contexte dans lequel circule le véhicule, par exemple en présence d'un panneau de limitation de vitesse légale autorisée. Dans un véhicule automobile muni d'un système ACC contextuel, la vitesse du véhicule est gérée par ce système.

On connaît des systèmes ACC pour lesquels l'adaptation de la vitesse du véhicule est habituellement réalisée en fonction du ou des véhicules précédant le véhicule, des panneaux de limitations de vitesse (vus par une caméra située à l'avant du véhicule ou embarqués dans une cartographie en tant qu'information ADAS, acronyme d'origine anglo-saxonne pour « Advance Driving Assist System »), des informations cartographiques fournissant des informations de courbure de virages, de pente, ainsi que des informations sur différents évènements rencontrés (intersection, rond-point...).

Toutefois, ces solutions présentent des inconvénients. En particulier, de tels systèmes peuvent créer des situations anxiogènes pour le conducteur et les passagers du véhicule. En effet, sur certaines voies de circulation, il peut être difficilement acceptable de rouler à la vitesse maximum réglementaire en ligne droite. Il s'agit par exemple des routes sans marquage au sol (dites de campagne ou rase-campagne). Le plus souvent, la route est trop étroite ou sinueuse et suivre la vitesse réglementaire peut s'avérer dangereux. Par exemple, sur une route de campagne, même étroite, la vitesse légale maximum autorisée est de 80 km/h tant qu'aucune autre limitation de vitesse n'est affichée par un panneau de limitation de vitesse. Cependant, si le véhicule circulait à cette vitesse sur une telle route, ceci entraînerait une situation anxiogène pour le conducteur du véhicule. Si le véhicule n'était pas muni de système ACC, le conducteur du véhicule réduirait la vitesse du véhicule pour se rassurer. Si le véhicule était muni d'un régulateur de vitesse, le conducteur du véhicule aurait également tendance à régler la vitesse de croisière selon une valeur inférieure à la vitesse réglementaire. Si le véhicule automobile est muni d'un système ACC contextuel, le conducteur aurait tendance à désactiver ce système, ce qui est dommage.

EP 3 556 629 A1 divulgue und procédé de limitation de la vitesse d'un véhicule circulant dans une courbe. Le procédé comprend les étapes de réception de plusieurs échantillons de données routières comprenant des points de localisation, détermination d'une valeur de paramètre pour chacun d'un premier ensemble de paramètres affectant la vitesse du véhicule, sélection d'un modèle de vitesse de véhicule basé sur le premier ensemble de valeurs de paramètres, détermination d'une valeur de paramètre pour chacun d'un deuxième ensemble de paramètres affectant la vitesse du véhicule. Une vitesse recommandée pour le véhicule est calculée pour au moins un des échantillons de route sur la base du modèle sélectionné et des valeurs de paramètres du deuxième ensemble de paramètres affectant la vitesse du véhicule.

DE 10 2017 006782 A1 divulgue un procédé qui concerne l'adaptation automatique d'une vitesse de véhicule, une vitesse cible étant déterminée à l'aide d'une reconnaissance des panneaux de signalisation et d'une catégorie de la route à parcourir.

Le but de l'invention est de fournir un procédé et un système de contrôle de la vitesse d'un véhicule remédiant aux inconvénients ci-dessus et améliorant les procédés et systèmes de contrôle de la vitesse d'un véhicule connus de l'art antérieur. En particulier, l'invention permet de réaliser un procédé et un système qui présentent un coût réduit et qui permettent de gérer la vitesse du véhicule en reproduisant le comportement humain, afin de maintenir un niveau de confort, de confiance et de sécurité à bord du véhicule.

Selon l'invention, un procédé de contrôle de la vitesse d'un véhicule sur une voie, comprend les étapes suivantes :

- acquisition d'au moins une première information relative à la voie et d'au moins une deuxième information relative aux conditions extérieures ;
- détermination d'une largeur de voie et d'une longueur de voie visible par un conducteur dudit véhicule, à partir de ladite au moins une première information ;
- calcul d'une vitesse adaptée pour le véhicule en fonction d'une vitesse maximum autorisée sur ladite voie, de ladite largeur de voie déterminée et en fonction de ladite longueur de voie visible déterminée et/ou des conditions extérieures ;

- réglage de la vitesse du véhicule en fonction de la vitesse calculée.

Lors de l'étape de calcul, la vitesse peut est déterminée à partir d'une fonction $V = V_{légale} - (a/W + b/L)$, avec $V_{légale}$ la vitesse maximum autorisée sur ladite voie, W la largeur de voie et L la longueur de voie visible déterminées lors de l'étape de détermination.

Selon une variante, lors de l'étape de calcul, la vitesse peut être déterminée à partir d'une fonction $V = V_{légale} - (a/W)c$, avec $V_{légale}$ la vitesse maximum autorisée sur ladite voie, W la largeur de voie déterminée lors de l'étape de détermination et c un coefficient pondérateur en fonction des conditions extérieures.

Selon une variante, lors de l'étape de calcul, la vitesse peut être déterminée à partir d'une fonction $V = V_{légale} - (a/W + b/L)c$, avec $V_{légale}$ la vitesse maximum autorisée sur ladite voie, W la largeur de voie et L la longueur de voie visible déterminées lors de l'étape de détermination et c un coefficient pondérateur en fonction des conditions extérieures.

Lors de l'étape d'acquisition, l'au moins une première information relative à la voie peut être acquise en utilisant une caméra et/ou une carte et/ou un LIDAR.

L'invention concerne aussi un système de contrôle de la vitesse d'un véhicule sur une voie, le système comprenant des éléments matériels et/ou logiciels mettant en oeuvre le procédé défini précédemment, notamment des éléments matériels et/ou logiciels conçus pour mettre en oeuvre le procédé défini précédemment, et/ou le système comprenant des moyens de mettre en oeuvre le procédé défini précédemment.

L'invention concerne encore un véhicule automobile comprenant un système défini précédemment.

L'invention concerne également un produit programme d'ordinateur comprenant des instructions de code de programme enregistrées sur un support lisible par ordinateur pour mettre en oeuvre les étapes du procédé défini précédemment lorsque ledit programme fonctionne sur un ordinateur ou un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en oeuvre le procédé défini précédemment.

L'invention concerne aussi un support d'enregistrement de données, lisible par un ordinateur, sur lequel est enregistré un programme d'ordinateur comprenant des instructions de code de programme de mise en oeuvre du procédé défini précédemment ou un support d'enregistrement lisible par ordinateur comprenant des instructions qui, lorsqu'elles sont exécutées par un ordinateur, conduisent celui-ci à mettre en oeuvre le procédé défini précédemment.

Les dessins annexés représentent, à titre d'exemple, un mode de réalisation d'un système de contrôle de la vitesse selon l'invention et un mode d'exécution d'un procédé de contrôle de la vitesse selon l'invention.

[Fig. 1] La figure 1 représente un mode de réalisation d'un système de contrôle de la vitesse d'un véhicule automobile.

[Fig. 2] La figure 2 représente un ordinogramme d'un mode d'exécution d'un procédé de contrôle de la vitesse d'un véhicule automobile.

L'invention propose un procédé et un système de contrôle de la vitesse d'un véhicule permettant de se rapprocher du comportement humain, notamment en situation de rétrécissement de voie, en modifiant automatiquement la vitesse du véhicule en fonction de la largeur de voie. Pour cela, l'invention propose notamment d'utiliser des informations déjà disponibles, par exemple utilisées pour le maintien du véhicule dans la voie.

Avantageusement, l'invention propose une réduction supplémentaire de la vitesse du véhicule en fonction des conditions extérieures, notamment en fonction des conditions climatiques, par exemple en cas de pluie, gel, neige ou lorsqu'il fait nuit. Les informations relatives aux conditions extérieures sont également déjà disponibles, par exemple fournies par un capteur de température et/ou un capteur de luminosité.

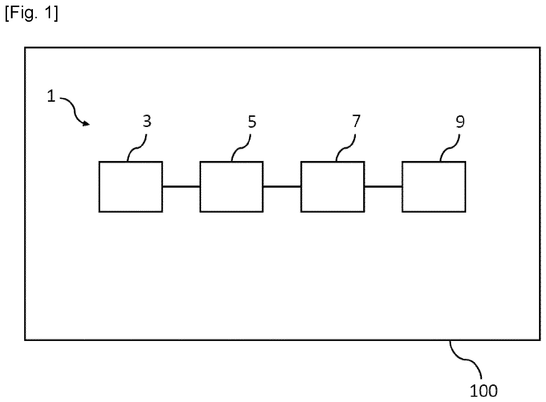

Un exemple d'un véhicule 100 équipé d'un mode de réalisation d'un système de contrôle de la vitesse 1 est décrit ci-après en référence à la figure 1.

Le véhicule 100 peut être un véhicule automobile tel une voiture, un camion ou un véhicule deux-roues.

Le véhicule 100 est destiné à se déplacer sur une voie de circulation ou portion de route.

Le véhicule 100 peut comprendre un système ACC contextuel.

Le véhicule 100 comprend un système de contrôle de la vitesse 1 selon un mode de réalisation de l'invention.

Le système 1 peut comprendre un moyen 3 pour acquérir au moins une première information relative à la voie et au moins une deuxième information relative aux conditions extérieures.

Le moyen 3 d'acquisition est apte à fournir au moins une première information relative à la voie, permettant de déterminer la largeur de voie et la longueur de voie visible.

Par « largeur de voie », on entend la dimension de la voie de circulation dans une direction perpendiculaire à la direction de circulation des véhicules sur la voie.

Par « longueur de voie vue » ou « longueur de voie visible », on entend la distance selon la direction de circulation des véhicules sur la voie sur laquelle la voie est visible par le conducteur.

De préférence, le moyen 3 d'acquisition peut être situé à l'avant du véhicule 100, sur la face avant du véhicule.

Le moyen 3 d'acquisition comprend par exemple une caméra et/ou une carte, notamment digitale, et/ou un LIDAR (acronyme d'origine anglo-saxonne pour « Light Détection And Ranging »).

La caméra est par exemple une caméra visible ou infrarouge. De préférence, la caméra peut être une caméra frontale.

Avantageusement, le moyen 3 d'acquisition peut en outre être apte à fournir au moins une deuxième information relative aux conditions extérieures, notamment climatiques.

Le moyen 3 d'acquisition peut comprendre en outre différents capteurs. Le moyen 3 d'acquisition comprend par exemple un capteur de luminosité et/ou un capteur de température.

Le système 1 peut comprendre en outre un moyen ou unité de commande 5.

Le moyen de commande 5 est par exemple un calculateur.

Le moyen de commande 5 est apte à déterminer la largeur de voie à partir de ladite au moins une première information fournie par le moyen d'acquisition 3, notamment à partir de l'image fournie par la caméra.

Le moyen de commande 5 peut en outre être apte à déterminer la longueur de voie visible à partir de ladite au moins une première information fournie par le moyen d'acquisition 3, notamment à partir de l'image fournie par la caméra.

Le moyen de commande 5 peut en outre être apte à déterminer un coefficient pondérateur c relatif aux conditions extérieures, notamment climatiques.

Par exemple, lorsqu'une au moins des conditions suivantes est satisfaite :

- déclenchement des essuie-glaces en continu de manière automatique sur une durée supérieure à 30 s ; et/ou
- allumage automatique des feux de croisement via le capteur de luminosité ;

alors le coefficient c prend la valeur de 1,1, ce qui correspond à une augmentation de la réduction de vitesse de 10 %. Sinon, le coefficient c vaut 1.

Le système 1 peut comprendre en outre un moyen de calcul 7.

Le moyen de calcul 7 est par exemple un calculateur.

Le système 1 peut comprendre deux calculateurs distincts 5 et 7.

Selon une variante, le moyen de calcul 7 peut être formé du même calculateur que le moyen de commande 5. Dans ce cas, le système 1 comprend un seul calculateur ou ordinateur de bord.

Le moyen de calcul 7 est destiné à calculer une vitesse adaptée à appliquer au véhicule, en fonction de la largeur de voie déterminée par le moyen de commande 5, et en fonction de la longueur de voie visible déterminée par le moyen de commande 5 et/ou du coefficient pondérateur relatif aux conditions extérieures, notamment climatiques.

La vitesse est déterminée par une fonction de la vitesse comme suit :

[Math 1]

$$V = V_{légale} - (a/W + b/L)$$

avec :

$V_{légale}$ : vitesse maximum autorisée
W : largeur de voie
L : longueur de voie visible

Pour calculer la réduction de vitesse, on divise par la largeur de voie et par la longueur de voie visible car plus ces deux paramètres sont faibles plus le risque est élevé pour le véhicule. La réduction de vitesse doit donc être d'autant plus élevée que la largeur de voie et la longueur de voie visible sont faibles.

Une telle fonction permet de tenir compte des rétrécissements de voie et également de la sinuosité de la route qui est un autre facteur aggravant.

Les coefficients a et b peuvent être déterminés par retour d'expérience sur des essais réalisés sur le véhicule.

A titre d'exemple, le coefficient a est par exemple compris entre 0 et 50, par exemple de l'ordre de 40. Le coefficient b est par exemple compris entre 0 et 300, par exemple de l'ordre de 250.

Par exemple, pour une route de campagne sans marquage au sol limitée à 80 km/h, et pour une largeur de voie W de 3,5 m et une longueur de voie visible L de 35 m, on obtient pour la vitesse V à appliquer au véhicule une valeur de 61 km/h, à partir de la formule suivante :

[Math 2]

$$V = 80 - (40/W + 250/L)$$

De préférence, la fonction de la vitesse V est bornée par des barrières usuelles.

Si la largeur de voie W est égale ou supérieure à une première borne A, par exemple 5,50 m, correspondant à une largeur de voie standard, on ne considère pas le paramètre a. On n'applique donc pas de réduction de la vitesse en fonction de la largeur de voie.

Si la longueur de voie visible est égale ou supérieure à une deuxième borne B, par exemple 100 m, on ne considère pas le paramètre b. On n'applique donc pas de réduction de la vitesse en fonction de la longueur de voie visible.

Selon une variante particulièrement avantageuse, la vitesse peut être déterminée par une fonction de la vitesse comme suit :

[Math 3]

$$V = V_{légale} - (a/W + b/L)c$$

avec :

$V_{légale}$ : vitesse maximum autorisée
W : largeur de voie
L : longueur de voie visible
c : coefficient pondérateur en fonction des conditions extérieures, notamment climatiques.

Le coefficient pondérateur c en fonction des conditions extérieures, notamment climatiques, permet de tenir compte notamment des conditions météorologiques comme la pluie, la neige, le gel, et de la luminosité (jour/nuit).

En effet, il a été constaté que les conducteurs ont tendance à réduire davantage la vitesse du véhicule lorsque la visibilité diminue, notamment la nuit. Une telle variante permet donc de se rapprocher davantage du comportement humain.

Selon une variante, la vitesse peut être déterminée par une fonction de la vitesse comme suit :

[Math 4]

$$V = V_{légale} - (a/W)c$$

avec :

$V_{légale}$ : vitesse maximum autorisée
W : largeur de voie
c : coefficient pondérateur en fonction des conditions extérieures, notamment climatiques.

Selon une variante, la vitesse peut être déterminée en fonction d'un écart fixe à soustraire à la vitesse du véhicule avant le rétrécissement de la voie.

Par exemple, cet écart fixe peut être d'environ 5 à 20 km/h.

La description qui suit concernant les coefficients a et b s'applique aux différentes variantes décrites ci-dessus.

Les coefficients a et b peuvent être variables. Les coefficients a et b dépendent notamment du conducteur du véhicule.

Les valeurs des coefficients a et b peuvent être préalablement déterminées par une méthode de détermination par retour d'expérience, notamment en utilisant des tests de roulage.

Un exemple d'une telle méthode de détermination des coefficients a et b par retour d'expérience est décrit ci-après.

Dans une première étape, on fait conduire le même véhicule par au moins deux conducteurs différents sur au moins deux routes de différentes largeurs. On fait par exemple conduire le véhicule par trois conducteurs différents sur trois routes de différentes largeurs.

Dans une deuxième étape, on compare les valeurs de vitesse du véhicule obtenues pour les différents conducteurs avec la valeur de vitesse annoncée par le système ACC du véhicule.

En parallèle, on enregistre, pour chaque conducteur, les valeurs de largeur de voie et de longueur de voie visible fournies par le moyen d'acquisition 3, notamment la caméra.

Dans une troisième étape, à partir des triplets de valeurs obtenus pour chaque conducteur, correspondant aux trois paramètres vitesse, largeur de voie et longueur de voie visible, on en déduit les coefficients a et b.

Avantageusement, le moyen de calcul 7 peut être apte à ajuster les coefficients a et/ou b préalablement déterminés.

Selon une variante, au lieu d'être préalablement déterminés, les coefficients a et/ou b peuvent être des informations acquises par le système 1.

Le système 1 peut être apte à déterminer les coefficients a et b par auto-apprentissage. Les coefficients a et b sont notamment déterminés par le système 1 en fonction du profil du conducteur.

Un conducteur pourrait avoir l'habitude de conduire moins vite que la plupart des conducteurs. Un tel système permet de s'adapter à la façon de conduire habituelle du conducteur afin qu'il se sente en sécurité.

L'auto-apprentissage par le système 1 peut être réalisé de la façon suivante.

Lorsque le système ACC du véhicule 100 n'est pas activé, l'algorithme de calcul du système 1 enregistre les valeurs des trois paramètres vitesse, largeur de voie et longueur de voie visible. Le système 1 peut ainsi en déduire des valeurs des coefficients a et b correspondant au profil de vitesse habituel du conducteur.

Selon une variante, pour déterminer les coefficients a et b, des données de vitesse moyenne sur certains trajets, notamment obtenues par des statistiques, pourraient être utilisées.

Selon une autre variante, pour déterminer les coefficients a et b, des données de carte haute définition pourraient être utilisées. Pour l'instant, les petites routes étant peu ou pas référencées, les données correspondant aux autoroutes pourraient être utilisées.

Avantageusement, d'autres paramètres pourraient être pris en compte pour le calcul de la vitesse du véhicule par le moyen de calcul 7.

Selon une variante, un auto-apprentissage du système 1 par le conducteur pourrait être utilisé, permettant de prendre en compte les situations pour lesquelles le conducteur abaisse lui-même la vitesse limite par rapport à la vitesse réglementaire, notamment d'un écart $\Delta V$, par exemple sur un certain type de routes.

Selon cette variante, la vitesse peut par exemple être déterminée par une fonction de la vitesse comme suit :

[Math 5]

$$V = \left(V_{légale} - \Delta V\right) - (a/W + b/L)c$$

Cette variante s'applique aux trois premières variantes décrites plus haut.

Selon une variante, dans le cas d'enchaînements de virages, on peut prendre en compte une vitesse moyenne au lieu de changer de vitesse. Ceci permet d'améliorer le confort du conducteur et des passagers du véhicule.

Le système 1 peut comprendre en outre un moyen de réglage 9 de la vitesse. Le moyen de réglage 9 est destiné à modifier si besoin la vitesse du véhicule en fonction de la vitesse calculée par le moyen de calcul 7.

Le moyen de réglage 9 comprend par exemple au moins un actionneur, notamment un actionneur électrique. L'au moins un actionneur est apte à réduire la vitesse du véhicule, en agissant notamment sur le moteur et/ou le frein. L'au moins un actionneur peut être piloté par des signaux issus d'un capteur de vitesse permettant de déterminer la vitesse actuelle du véhicule et du moyen de calcul 7 fournissant la vitesse à appliquer.

Si la vitesse actuelle du véhicule est supérieure à la vitesse fournie par le moyen de calcul 7, le moyen de réglage 9 modifie la vitesse du véhicule pour qu'elle soit égale ou sensiblement égale à la vitesse fournie par le moyen de calcul 7.

Le véhicule 100, notamment le système 1, comprend tous les éléments matériels et/ou logiciels aptes à régir le procédé de contrôle de la vitesse décrit plus bas.

Ces éléments matériels et/ou logiciels peuvent inclure des modules logiciels.

Un avantage d'un système du type de celui décrit ci-dessus réside dans le fait qu'il ne requiert pas de composant supplémentaire sur le véhicule. Les informations utilisées pour calculer la vitesse sont déjà disponibles, notamment utilisées pour le maintien du véhicule dans la voie ou pour détecter automatiquement des obstacles ou d'autres véhicules circulant sur une chaussée. Les informations relatives aux conditions extérieures, notamment climatiques, sont également déjà disponibles, par exemple fournies par un capteur de température et/ou un capteur de luminosité. Il en résulte un coût réduit d'un tel système.

Un autre avantage d'un système du type de celui décrit ci-dessus réside dans le fait qu'il permet au conducteur et aux passagers éventuels du véhicule de se sentir plus en sécurité. En effet, un tel système permet de gérer la vitesse du véhicule en reproduisant le comportement humain. Un tel système permet d'adapter la vitesse automatiquement afin de maintenir un niveau de confort, de confiance et de sécurité à bord du véhicule.

Un autre avantage d'un système du type de celui décrit ci-dessus est lié au fait qu'il peut s'adapter à différents conducteurs du véhicule.

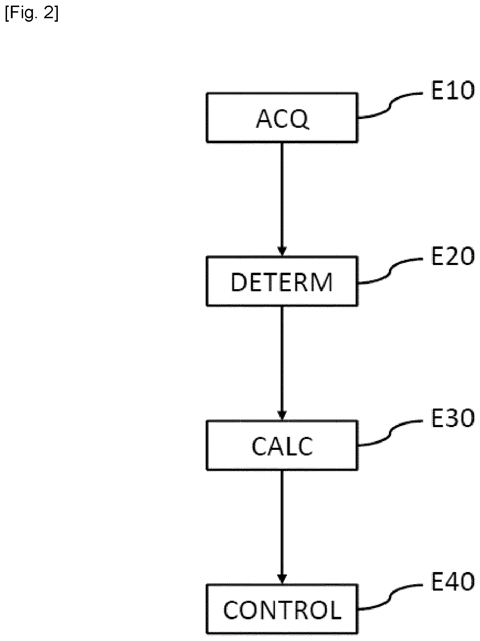

Un mode d'exécution d'un procédé de contrôle de la vitesse d'un véhicule sur une voie, le véhicule comprenant un système 1 du type de celui décrit ci-dessus, est décrit ci-après en référence à la figure 2. Ce mode d'exécution est décrit dans le cas d'un véhicule automobile 100.

Dans une première étape E10, on réalise une acquisition d'au moins une première information relative à la voie, notamment une information de largeur de voie.

On peut en outre réaliser, en plus de l'acquisition d'une première information relative à la largeur de voie, une acquisition d'une information relative à la longueur de voie vue ou visible.

On peut en outre réaliser, de façon optionnelle, en plus de l'acquisition d'une première information relative à la largeur de voie, une acquisition d'au moins une deuxième information relative aux conditions extérieures, notamment climatiques.

La première étape E10 d'acquisition est par exemple réalisée en utilisant le moyen d'acquisition 3 du système 1, comprenant par exemple une caméra et/ou une carte, notamment digitale, et/ou un LIDAR et/ou un capteur de température et/ou un capteur de luminosité.

Dans une deuxième étape E20, on détermine la largeur de voie et la longueur de voie visible, à partir de l'au moins une première information relative à la voie obtenue lors de l'étape précédente d'acquisition E10.

On peut en outre déterminer la valeur d'un coefficient pondérateur c relatif aux conditions extérieures, notamment climatiques, à partir de l'au moins une deuxième information relative aux conditions extérieures obtenue lors de l'étape précédente d'acquisition E10.

La deuxième étape E20 est par exemple réalisée en utilisant le moyen de commande 5 du système 1.

Dans une troisième étape E30, on calcule une vitesse adaptée pour le véhicule en fonction de ladite largeur de voie déterminée lors de la deuxième étape E20 et en fonction de ladite longueur de voie visible déterminée lors de la deuxième étape E20 et/ou des conditions extérieures, notamment climatiques.

La vitesse est déterminée par une fonction de la vitesse comme suit :

[Math 6]

$$V = V_{légale} - (a/W + b/L)$$

avec :

$V_{légale}$ : vitesse maximum autorisée
W : largeur de voie
L : longueur de voie visible

Selon une variante particulièrement avantageuse, la vitesse peut être déterminée par une fonction de la vitesse comme suit :

[Math 7]

$$V = V_{légale} - (a/W + b/L)c$$

avec :

$V_{légale}$ : vitesse maximum autorisée
W : largeur de voie
L : longueur de voie visible
c : coefficient pondérateur en fonction des conditions extérieures, notamment climatiques.

Selon une variante, la vitesse peut être déterminée par une fonction de la vitesse comme suit :

[Math 8]

$$V = V_{légale} - (a/W)c$$

avec :

$V_{légale}$ : vitesse maximum autorisée
W : largeur de voie
c : coefficient pondérateur en fonction des conditions extérieures, notamment climatiques.

Pour les différentes variantes, les coefficients a et b peuvent être préalablement déterminés.

Les coefficients a et b peuvent être déterminés par retour d'expérience sur des essais réalisés sur le véhicule.

Selon une variante, la vitesse peut être déterminée en fonction d'un écart fixe à soustraire à la vitesse du véhicule avant le rétrécissement de la voie.

La troisième étape E30 de calcul est par exemple réalisée en utilisant le moyen de calcul 7 du système 1.

Dans une quatrième étape E40, on règle la vitesse du véhicule en fonction de la vitesse calculée lors de l'étape E30.

Si la vitesse actuelle du véhicule est supérieure à la vitesse calculée lors de l'étape E30, la vitesse du véhicule est modifiée pour qu'elle soit égale ou sensiblement égale à la vitesse calculée lors de l'étape E30.

La quatrième étape E40 de réglage de la vitesse est par exemple réalisée en utilisant le moyen de réglage 9 du système 1, comprenant par exemple un actionneur.

Un avantage d'un procédé du type de celui décrit ci-dessus réside dans le fait qu'il permet au conducteur et aux passagers éventuels du véhicule de se sentir plus en sécurité. En effet, un tel procédé permet de gérer la vitesse du véhicule en reproduisant le comportement humain. Un tel procédé permet d'adapter la vitesse automatiquement afin de maintenir un niveau de confort, de confiance et de sécurité à bord du véhicule.

Bien que l'invention ait été décrite ci-dessus dans le cas d'un véhicule automobile, l'invention s'applique bien entendu à tout type de véhicule.

**Revendications**

**1.** Procédé de contrôle de la vitesse d'un véhicule sur une voie, le procédé comprenant les étapes suivantes :

- acquisition (E10) d'au moins une première information relative à la voie et d'au moins une deuxième information relative aux conditions extérieures ;
- détermination (E20) d'une largeur de voie et d'une longueur de voie visible par un conducteur dudit véhicule, à partir de ladite au moins une première information ;
- calcul (E30) d'une vitesse adaptée pour le véhicule en fonction d'une vitesse maximum autorisée sur ladite voie, de ladite largeur de voie déterminée et en fonction de ladite longueur de voie visible déterminée et/ou des conditions extérieures ;
- réglage (E40) de la vitesse du véhicule en fonction de la vitesse calculée, lors de l'étape de calcul (E30), la vitesse est déterminée à partir d'une fonction $V = V_{légaLe} - (a/W + b/L)$, avec $V_{légale}$ la vitesse maximum autorisée sur ladite voie, W la largeur de voie et L la longueur de voie visible déterminées lors de l'étape de détermination (E20), a et b des coefficients préalablement déterminés.

**2.** Procédé selon la revendication 1, dans lequel, lors de l'étape de calcul (E30), la vitesse est déterminée à partir d'une fonction $V = V_{légale} - (a/W)c$, avec $V_{légale}$ la vitesse maximum autorisée sur ladite voie, W la largeur de voie déterminée lors de l'étape de détermination (E20) et c un coefficient pondérateur en fonction des conditions extérieures.

**3.** Procédé selon la revendication 1, dans lequel, lors de l'étape de calcul (E30), la vitesse est déterminée à partir d'une fonction $V = V_{légale} - (a/W + b/L)c$, avec $V_{légale}$ la vitesse maximum autorisée sur ladite voie, W la largeur de voie et L la longueur de voie visible déterminées lors de l'étape de détermination (E20) et c un coefficient pondérateur en fonction des conditions extérieures.

**4.** Procédé selon l'une quelconque des revendications précédentes, dans lequel, lors de l'étape d'acquisition (E10), l'au moins une première information relative à la voie est acquise en utilisant une caméra et/ou une carte et/ou un LIDAR.

5. Système (1) de contrôle de la vitesse d'un véhicule sur une voie, le système comprenant des éléments (3, 5, 7, 9) matériels et/ou logiciels mettant en oeuvre le procédé selon l'une des revendications 1 à 4.

6. Véhicule automobile (100) comprenant un système (1) selon la revendication précédente.

7. Produit programme d'ordinateur comprenant des instructions qui, lorsque le programme est exécuté par un ordinateur, conduisent celui ci à mettre en oeuvre le procédé selon l'une des revendications 1 à 4.

8. Support d'enregistrement de données, lisible par un ordinateur, sur lequel est enregistré le programme d'ordinateur selon la revendication 7.

**Patentansprüche**

1. Verfahren zur Steuerung der Geschwindigkeit eines Fahrzeugs auf einer Fahrbahn, wobei das Verfahren die folgenden Schritte umfasst:

   - Erfassen (E10) mindestens einer ersten Information bezüglich der Fahrbahn und mindestens einer zweiten Information bezüglich der äußeren Bedingungen;
   - Ermitteln (E20) einer Fahrbahnbreite und einer von einem Fahrer des Fahrzeugs einsehbaren Fahrbahnlänge anhand der mindestens einen ersten Information;
   - Berechnen (E30) einer angepassten Geschwindigkeit für das Fahrzeug in Abhängigkeit von einer zulässigen Höchstgeschwindigkeit auf der Fahrbahn, von der ermittelten Fahrbahnbreite und in Abhängigkeit von der ermittelten einsehbaren Fahrbahnlänge und/oder den äußeren Bedingungen;
   - Regeln (E40) der Geschwindigkeit des Fahrzeugs in Abhängigkeit von der im Schritt des Berechnens (E30) berechneten Geschwindigkeit, wobei die Geschwindigkeit anhand einer Funktion $V = V_{légale} - (a/W + b/L)$ ermittelt wird, worin $V_{légale}$ die zulässige Höchstgeschwindigkeit auf der Fahrbahn ist, W die Fahrbahnbreite ist und L die einsehbare Fahrbahnlänge ist, die im Schritt des Ermittelns (E20) ermittelt wurden, a und b zuvor ermittelte Koeffizienten sind.

2. Verfahren nach Anspruch 1, bei dem beim Schritt des Berechnens (E30) die Geschwindigkeit anhand einer Funktion $V = V_{légale} - (a/W)c$ ermittelt wird, worin $V_{légale}$ die zulässige Höchstgeschwindigkeit auf der Fahrbahn ist, W die beim Schritt des Ermittelns (E20) ermittelte Fahrbahnbreite ist und c ein in Abhängigkeit von den äußeren Bedingungen gewichtender Koeffizient ist.

3. Verfahren nach Anspruch 1, bei dem beim Schritt des Berechnens (E30) die Geschwindigkeit anhand einer Funktion $V = V_{légale} - (a/W + b/L)c$ ermittelt wird, worin $V_{légale}$ die zulässige Höchstgeschwindigkeit auf der Fahrbahn ist, W die Fahrbahnbreite ist und L die einsehbare Fahrbahnlänge ist, die beim Schritt des Ermittelns (E20) ermittelt wurden, und c ein in Abhängigkeit von den äußeren Bedingungen gewichtender Koeffizient ist.

4. Verfahren nach einem der vorhergehenden Ansprüche, bei dem beim Schritt des Erfassens (E10) die mindestens eine erste Information bezüglich der Fahrbahn unter Verwendung einer Kamera und/oder einer Karte und/oder eines LIDAR erfasst wird.

5. System (1) zur Steuerung der Geschwindigkeit eines Fahrzeugs auf einer Fahrbahn, das Hardware- und/oder Softwareelemente (3, 5, 7, 9) umfasst, die das Verfahren nach einem der Ansprüche 1 bis 4 umsetzen.

6. Kraftfahrzeug (100), das ein System (1) nach dem vorhergehenden Anspruch umfasst.

7. Computerprogrammprodukt, das Anweisungen umfasst, die bei der Ausführung des Programms durch einen Computer diesen veranlassen, das Verfahren nach einem der Ansprüche 1 bis 4 umzusetzen.

8. Computerlesbares Datenspeichermedium, und auf dem das Computerprogrammprodukt nach Anspruch 7 gespeichert ist.

**Claims**

1. Method for controlling the speed of a vehicle on a lane, the method comprising the following steps:

   - acquiring (E10) at least one first item of information relating to the lane and at least one second item of information relating to the external conditions;
   - determining (E20) a lane width and a lane length that is visible to a driver of said vehicle, on the basis of said at least one first item of information;
   - calculating (E30) a suitable speed for the vehicle depending on a maximum speed authorized on said lane, on said determined lane width and depending on said determined visible lane length and/or on the external conditions;
   - adjusting (E40) the speed of the vehicle depending on the calculated speed, during the calculating step (E30), the speed is

   determined from a function $V = V_{legal} - (a/W + b/L)$, where $V_{legal}$ is the maximum speed authorized on said lane, W is the lane width and L is the visible lane length that were determined during the determining step (E20), a and b are predetermined coefficients.

2. Method according to Claim 1, wherein, during the calculating step (E30), the speed is determined from a function $V = V_{legal} - (a/W)c$, where $V_{legal}$ is the maximum speed authorized on said lane, W is the lane width determined during the determining step (E20) and c is a weighting coefficient depending on the external conditions.

3. Method according to Claim 1, wherein, during the calculating step (E30), the speed is determined from a function $V - V_{legal} - (a/W + b/L)c$, where $V_{legal}$ is the maximum speed authorized on said lane, W is the lane width and L is the visible lane length that were determined during the determining step (E20) and c is a weighting coefficient depending on the external conditions.

4. Method according to any one of the preceding claims, wherein, during the acquiring step (E10), the at least one first item of information relating to the lane is acquired using a camera and/or a map and/or a LIDAR.

5. System (1) for controlling the speed of a vehicle on a lane, the system comprising software and/or hardware elements (3, 5, 7, 9) implementing the method according to one of Claims 1 to 4.

6. Motor vehicle (100) comprising a system (1) according to the preceding claim.

7. Computer program product comprising instructions which, when the program is executed by a computer, cause said program to implement the method according to one of Claims 1 to 4.

8. Computer-readable data storage medium on which the computer program according to Claim 7 is stored.

[Fig. 1]

[Fig. 2]

**EP 4 157 688 B1**

## RÉFÉRENCES CITÉES DANS LA DESCRIPTION

**Documents brevets cités dans la description**

- EP 3556629 A1

- DE 102017006782 A1